# EUROPÄISCHE PATENTSCHRIFT

(11) **EP 3 601 808 B1**
(45) Veröffentlichungstag und Bekanntmachung des Hinweises auf die Patenterteilung: **09.12.2020**
(21) Anmeldenummer: 17733762.3
(22) Anmeldetag: 16.06.2017
(51) Int. Cl.: F15B 15/20, F15B 21/00, F15B 5/00, F16K 31/122

(54) **PROZESSSTEUERVORRICHTUNG**
PROCESS CONTROL DEVICE
DISPOSITIF DE COMMANDE DE PROCESSUS

(43) Veröffentlichungstag der Anmeldung: 05.02.2020
(73) Patentinhaber: Festo SE & Co. KG, 73734 Esslingen (DE)
(72) Erfinder: SPREITZENBARTH, Rainer, 73734 Esslingen (DE); MÜLLER, Axel, 71034 Böblingen (DE); LECHLER, Simon, 70599 Stuttgart (DE)
(74) Vertreter: Patentanwälte Magenbauer & Kollegen Partnerschaft mbB
(86) Internationale Anmeldenummer: PCT/EP2017/064817
(87) Internationale Veröffentlichungsnummer: WO 2018/228705

(56) Entgegenhaltungen:
- EP-B1- 2 627 935
- WO-A1-2016/202356
- DE-A1-102013 208 153
- GB-A- 2 245 313

## Beschreibung

Die Erfindung betrifft eine Prozesssteuervorrichtung, mit einer zur Ansteuerung eines pneumatischen Stellantriebes ausgebildeten elektropneumatischen Steuereinheit, die ein Befestigungsmodul aufweist, das an einer Unterseite über eine zur Befestigung an einem Antriebsgehäuse des Stellantriebes ausgebildete Befestigungsschnittstelle verfügt, und die eine an dem Befestigungsmodul fixierte, mindestens ein Steuerventil enthaltende elektrisch betätigbare Steuerventileinrichtung aufweist, die mit mindestens einem das Befestigungsmodul zur fluidischen Verbindung mit dem Stellantrieb durchsetzenden Antriebskanal kommuniziert, wobei die Steuereinheit eine bezüglich des Befestigungsmoduls gesonderte Schnittstellenplatte aufweist, die an dem Befestigungsmodul an dessen von der Befestigungsschnittstelle abgewandten Oberseite montiert ist und die von einem mit dem mindestens einen Antriebskanal des Befestigungsmoduls kommunizierenden Schnittstellenplatten-Fluidkanalsystem durchsetzt ist, wobei die Schnittstellenplatte an ihrer dem Befestigungsmodul abgewandten Oberseite eine mechanisch-pneumatische Montage-Schnittstelle aufweist, an der die Steuerventileinrichtung unter gleichzeitiger Kommunikation mit dem Schnittstellenplatten-Fluidkanalsystem montiert ist.

Eine aus der EP 2 627 935 B1 bekannte Prozesssteuervorrichtung dieser Art hat eine elektropneumatische Steuereinheit mit einem zur Befestigung an einem Ventil dienenden Kopplungskörper, an dessen Oberseite ein Fluidblock angebracht ist, der mit Ventileinrichtungen bestückt ist.

Die DE 10 2013 208153 A1 beschreibt einen Stellkörper, der als Wendeplatte ausgebildet sein kann und der in der Lage ist, einen Stellungsregler mit einem Stellantrieb mechanisch und fluidisch zu verbinden.

Aus der GB 2 245 313 A ist ein fluidbetätigter Antrieb bekannt, der durch eine Pumpeinheit und eine Steuereinheit gesteuert wird, wobei die Pumpeinheit ein unter einem Betriebsdruck stehendes Fluid bereitstellt und die Steuereinheit die Fluidströmung zu und von dem Antrieb steuert.

Die WO 2016/202356 A1 offenbart ein Antriebssystem, das einen fluidbetätigten Drehantrieb aufweist, der an einer Ventilarmatur montiert ist. Die Ventilarmatur enthält ein Ventilglied, das durch den Drehantrieb betätigt werden kann.

Eine aus der WO 02/093058 A1 bekannte Prozesssteuervorrichtung enthält ein Prozessventil mit einem Stellantrieb und eine an den Stellantrieb angebaute elektropneumatische Steuereinheit. Die Steuereinheit verfügt über ein Gehäuse mit einem Unterteil, das als Befestigungsmodul zur Fixierung am Antriebsgehäuse des Stellantriebes genutzt wird. Das Befestigungsmodul fungiert gleichzeitig als unmittelbarer Träger für eine an seine Oberseite angebaute und im Gehäuse der Steuereinheit untergebrachte Steuerventileinrichtung. Die Steuereinheit enthält auch Mittel zur Generierung von Rückmeldesignalen des Stellantriebes, um die Position einer beweglichen Antriebseinheit des Stellantriebes und somit den Betriebszustand des Prozessventils steuern zu können.

Die GB 2 138 108 A offenbart eine Ventileinheit mit einem Stellantrieb und einer rückseitig an dem Stellantrieb montierten Steuereinheit. Die Steuereinheit ist mit einer elektrisch betätigbaren Steuerventileinrichtung ausgestattet und enthält Mittel zur Generierung von Rückmeldesignalen des Stellantriebes.

Aus der DE 10 2007 058 283 A1 ist eine Vorrichtung zum Ansteuern eines Prozessventils bekannt, die über ein Elektronikmodul und mindestens ein Elektromagnetventil verfügt. Das Elektromagnetventil ist an der Oberseite eines Basisteils montiert, das an einer Stirnseite des anzusteuernden Prozessventils befestigt ist.

Aus der DE 23 03 324 A ist eine Strömungssteuereinrichtung bekannt, die über eine Kolben-Zylinder-Einheit verfügt, an der stirnseitig über eine Basis eine Steueranordnung montiert ist, die ein an der Basis angebrachtes Luftventil aufweist.

Der Erfindung liegt die Aufgabe zugrunde, eine Prozesssteuervorrichtung zu schaffen, die bei einfacher Herstellung kostengünstig für unterschiedliche Anwendungsfälle konfigurierbar ist.

Zur Lösung dieser Aufgabe ist in Verbindung mit den eingangs genannten Merkmalen vorgesehen, dass das Befestigungsmodul an seiner der Befestigungsschnittstelle abgewandten Oberseite eine Aufnahmevertiefung aufweist, in die die Schnittstellenplatte eingesetzt ist, wobei die Schnittstellenplatte derart vollständig in der Aufnahmevertiefung aufgenommen ist, dass ihre Oberseite bündig mit den die Aufnahmevertiefung umrahmenden Flächenabschnitten der Oberseite des Befestigungsmoduls verläuft.

Die erfindungsgemäße Prozesssteuervorrichtung enthält eine elektropneumatische Steuereinheit, die mittels eines zu ihr gehörenden Befestigungsmoduls am Antriebsgehäuse eines Stellantriebes fixierbar ist, der durch die elektropneumatische Steuereinheit betriebsmäßig angesteuert werden soll. Zur Fixierung am Antriebsgehäuse des Stellantriebes weist das Befestigungsmodul an einer Unterseite eine entsprechend ausgebildete Befestigungsschnittstelle auf. Eine zu der Steuereinheit gehörende, elektrisch betätigbare Steuerventileinrichtung ist an dem Befestigungsmodul fixiert, allerdings nicht direkt, sondern indirekt unter Zwischenschaltung einer gesonderten bevorzugt starren Schnittstellenplatte, die an dem Befestigungsmodul an dessen der Unterseite entgegengesetzten Oberseite montiert ist. Die Schnittstellenplatte hat an ihrer dem Befestigungsmodul abgewandten Oberseite eine mechanisch-pneumatische Montage-Schnittstelle, an der die Steuerventileinrichtung mechanisch fixiert ist und gleichzeitig mit einem in der Schnittstellenplatte ausgebildeten, als Schnittstellenplatten-Fluidkanalsystem bezeichneten Fluidkanalsystem kommuniziert. Da das Schnittstellenplatten-Fluidkanalsystem mit mindestens einem das Befestigungsmodul durchsetzenden Antriebskanal kommuniziert, der im an einem Stellantrieb befestigten Zustand der Steuereinheit zur Betätigung des Stellantriebes verwendbar ist, fungiert die Schnittstellenplatte nicht nur als Befestigungsbasis für die Steuerventileinrichtung, sondern auch als pneumatisches Interfaceelement für die zur Ansteuerung des Stellantriebes erforderlichen pneumatischen Verbindungen. Die Schnittstellenplatte bietet die Möglichkeit, eine fluidische und mechanische Adaption der jeweils verwendeten Steuerventileinrichtung an ein für alle Anwendungsfälle einheitliches Befestigungsmodul vorzunehmen, das in der Regel außer einem mindestens einen Antriebskanal aufweisenden Befestigungsmodul-Fluidkanalsystem auch noch weitere funktionsrelevante Bestandteile aufzuweisen hat, beispielsweise Befestigungsmittel für ein Gehäuse und/oder für eine Steuerelektronik und/oder eine Rückmeldeeinrichtung für Rückmeldesignale des Stellantriebes. Besonders kompakte Höhenabmessungen der Steuereinheit lassen sich verwirklichen, da die Schnittstellenplatte in eine an der Oberseite im Befestigungsmodul ausgebildete Aufnahmevertiefung eingesetzt ist. Die Umfangskontur der Aufnahmevertiefung entspricht dabei zweckmäßigerweise zumindest im Wesentlichen derjenigen der Schnittstellenplatte. Vorteilhaft ist es, dass die Schnittstellenplatte derart vollständig in der Aufnahmevertiefung aufgenommen ist, dass sie an der Oberseite bündig mit den die Aufnahmevertiefung umrahmenden Abschnitten der Oberseite des Befestigungsmoduls verläuft.

Vorteilhafte Weiterbildungen der Erfindung gehen aus den Unteransprüchen hervor.

Die Steuerventileinrichtung ist bevorzugt als eine Baueinheit ausgebildet, die im nicht an dem Schnittstellenmodul montierten Zustand einheitlich handhabbar ist und auch als Steuerventileinheit bezeichnet werden kann. Diese Baueinheit umfasst zweckmäßigerweise auch eine jedes Steuerventil der Steuerventileinrichtung tragende Tragplatte, die von einem als Tragplatten-Fluidkanalsystem bezeichneten Fluidkanalsystem durchsetzt ist, das mit dem mindestens einen Steuerventil der Steuerventileinrichtung kommuniziert. Die Steuerventileinrichtung ist als Baueinheit unter Vermittlung der Tragplatte so an der Montage-Schnittstelle der Schnittstellenplatte montiert, dass ihr Tragplatten-Fluidkanalsystem mit dem Schnittstellenplatten-Fluidkanalsystem der Schnittstellenplatte in Fluidverbindung steht. Insbesondere wenn die Steuerventileinrichtung über mehrere Steuerventile verfügt, erübrigt sich somit eine aufwendige Einzelmontage mehrerer Steuerventile an der Schnittstellenplatte.

An ihrer der Schnittstellenplatte zugewandten Unterseite weist die Tragplatte zweckmäßigerweise eine auf die Montage-Schnittstelle der Schnittstellenplatte abgestimmte, mechanisch-pneumatische Anbau-Schnittstelle auf. Über sie ist die Schnittstellenplatte durch Zusammenwirken mit der Montage-Schnittstelle an der Schnittstellenplatte fixiert. An der entgegengesetzten Oberseite der Schnittstellenplatte befindet sich eine Bestückungsfläche, die abhängig von der Ausführungsform der Steuerventileinrichtung mit einem oder mehreren Steuerventilen bestückt ist. Jedes dieser Steuerventile steht in Fluidverbindung mit dem in der Tragplatte ausgebildeten Tragplatten-Fluidkanalsystem.

Die Tragplatte ist bei einer bevorzugten Ausführungsform einstückig ausgebildet. Sie kann alternativ allerdings auch einen modularen Aufbau haben und sich aus mehreren in ihrer Höhenrichtung aufeinandergestapelten plattenförmigen Tragplattenmodulen zusammensetzen. Der modulare Aufbau ermöglicht es beispielsweise, durch in den einander zugewandten Fügeflächen der Tragplattenmodule ausgebildete Nuten auch komplexe Kanalführungen innerhalb der Tragplatte zu realisieren, ohne auf Querbohrungen und damit zusammenhängende Verkugelungen angewiesen zu sein.

Die Anzahl der Steuerventile der Steuerventileinrichtung variiert insbesondere in Abhängigkeit von der gewünschten Ansteuerungsfunktionalität und/oder der Art des anzusteuernden Stellantriebes. Der Stellantrieb kann beispielsweise ein einfach wirkender Stellantrieb oder ein doppelt wirkender Stellantrieb sein, wobei zur Ansteuerung eines doppelt wirkenden Stellantriebes eine andere Anzahl von Steuerventilen verwendet wird als zur Ansteuerung eines einfach wirkenden Stellantriebes. Allerdings kann die Steuerventileinrichtung auch bei einem doppelt wirkenden Stellantrieb nur ein einziges Steuerventil aufweisen, das über eine entsprechende Ventilfunktionalität verfügt.

Ist die Steuerventileinrichtung mit mehreren Steuerventilen ausgestattet, können diese mehreren Steuerventile - insbesondere abhängig von der Art der Steuerventile - entweder individuell an der Tragplatte befestigt sein oder aber einheitlich über einen gemeinsamen Grundkörper.

Besonders kostengünstig lässt sich die Prozesssteuervorrichtung realisieren, wenn alle Fluidkanäle des Schnittstellen-Fluidkanalsystems so ausgebildet sind, dass sie die Schnittstellenplatte linear in ihrer Höhenrichtung durchsetzen. Dadurch ergeben sich bevorzugt gleiche Mündungsmuster der Fluidkanäle an einerseits der Unterseite und andererseits der Oberseite der Schnittstellenplatte.

Die Schnittstellenplatte kann beispielsweise durch Verrastung oder durch Einpressen am Befestigungsmodul fixiert sein. Eine besonders einfache und dennoch stabile Fixierung wird allerdings dadurch erreicht, dass die Schnittstellenplatte mittels das Befestigungsmodul von unten her durchsetzender Befestigungsschrauben am Befestigungsmodul fixiert ist. Jede Befestigungsschraube greift dabei zweckmäßigerweise in eine sacklochartige, mit einem Innengewinde versehene Befestigungsbohrung der Schnittstellenplatte von unten her ein.

Die Prozesssteuervorrichtung umfasst zweckmäßigerweise mehrere Steuerventileinrichtungen unterschiedlichen Typs. Diese typmäßig unterschiedlichen Steuerventileinrichtungen unterscheiden sich insbesondere zumindest in ihrer Funktionalität und/oder in ihrem Aufbau voneinander. Beispielsweise kann ein erster Steuerventileinrichtungstyp mindestens ein Piezoventil als ein Steuerventil enthalten, während mindestens ein zweiter Steuerventileinrichtungstyp mindestens ein Magnetventil als ein Steuerventil enthält. Unterschiedliche Steuerventileinrichtungstypen können auch daraus resultieren, dass die Anzahl der jeweils integrierten Steuerventile unterschiedlich ist. Unterschiedliche Funktionalitäten können sich beispielsweise darin äußern, dass eine Steuerventileinrichtung eines ersten Typs eine 3/3-Ventilfunktionalität hat, während ein zweiter Typ von Steuerventileinrichtungen über eine 5/3-Ventilfunktionalität verfügt.

Jedenfalls ist die Montage-Schnittstelle der Schnittstellenplatte bevorzugt so ausgebildet, dass sie eine alternative Montage einer Steuerventileinrichtung jedes vorhandenen Steuerventileinrichtungstyps ermöglicht. Somit besteht bei der Herstellung der Prozesssteuervorrichtung die Möglichkeit, abhängig vom Einsatzzweck der Prozesssteuervorrichtung die Schnittstellenplatte mit einer Steuerventileinrichtung zu bestücken, die aus den bereitstehenden mehreren Steuerventileinrichtungstypen ausgewählt ist. Somit kann die Steuereinheit kostengünstig auf der Grundlage eines Baukastensystems zusammengestellt werden.

Die an der Oberseite des Befestigungsmoduls ausgebildete mechanisch-pneumatische Montage-Schnittstelle verfügt zweckmäßigerweise über eine Mehrzahl von mit Innengewinde versehenen Befestigungsbohrungen, in die zur Fixierung der Steuerventileinrichtung entsprechend angepasste Befestigungsschrauben einschraubbar sind, die sich an der Steuerventileinrichtung abstützen. Dabei kann die Montage-Schnittstelle zur alternativen Montage unterschiedlicher Typen von Steuerventileinrichtungen jeweils eigene Befestigungsbohrungen aufweisen. Alternativ kann die Montage-Schnittstelle aber auch so ausgeführt sein, dass für die unterschiedlichen Steuerventileinrichtungen jeweils teils die gleichen und teils unterschiedliche Befestigungsbohrungen vorhanden sind. Selbstverständlich besteht grundsätzlich auch die Möglichkeit, die Montage-Schnittstelle so auszuführen, dass die vorhandenen Befestigungsbohrungen jeweils für alle Typen von Steuerventileinrichtungen verwendbar sind.

Zur fluiddichten Abdichtung der Fluidverbindungen zwischen dem Befestigungsmodul und der Schnittstellenplatte ist zwischen diese beiden Komponenten zweckmäßigerweise ein maskenartiges, insbesondere gummielastisches Dichtungselement eingegliedert. Dieses Dichtungselement verfügt über eine Mehrzahl von Durchbrechungen, die von einer Dichtungsstruktur umgeben sind. Ein solches maskenartiges Dichtungselement lässt sich bei der Montage wesentlich einfacher handhaben als eine Mehrzahl individueller Dichtungsringe.

Das Befestigungsmodul ist bevorzugt plattenförmig ausgebildet. Es kann beispielsweise als eine untere Abschlusswand eines Gehäuses der Steuereinheit fungieren, in dem die Steuerventileinrichtung untergebracht ist.

Die Prozesssteuervorrichtung umfasst zweckmäßigerweise einen pneumatisch betätigbaren Stellantrieb, der über ein Antriebsgehäuse verfügt, in dem sich eine durch gesteuerte Druckluftbeaufschlagung bewegbare Antriebseinheit erstreckt, die an einer Vorderseite des Antriebsgehäuses herausragt, um mit einer anzutreibenden Komponente verbunden oder verbindbar zu sein. Bei der anzutreibenden Komponente handelt es sich insbesondere um ein Ventilglied einer Ventilarmatur eines Prozessventils, zu dem der Stellantrieb zweckmäßigerweise gehört. Die Steuereinheit ist mittels der Befestigungsschnittstelle ihres Befestigungsmoduls rückseitig an das Antriebsgehäuse angebaut.

Die elektropneumatische Steuereinheit verfügt zweckmäßigerweise über eine Steuerelektronik, die zur elektrischen Ansteuerung an die Steuerventileinrichtung angeschlossen ist. Die Steuerelektronik ist insbesondere zur Verarbeitung von Rückmeldesignalen des Stellantriebes ausgebildet, um den Stellantrieb abhängig von diesen Rückmeldesignalen betreiben zu können und insbesondere eine bewegliche Antriebseinheit des Stellantriebes abhängig von den Rückmeldesignalen bewegen und positionieren zu können.

Für die Steuereinheit kommen unterschiedliche funktionelle Ausprägungen in Frage. Beispielsweise kann die Steuereinheit für eine ungeregelte Ansteuerung der Steuerventileinrichtung ausgeführt sein, wobei ihr als Rückmeldesignale beispielsweise einfache Sensorsignale zugeführt werden, die abhängig von gewissen Positionen der Antriebseinheit des Stellantriebes generiert werden. Besonders vorteilhaft ist allerdings eine Ausführung der Steuereinheit als eine Stellungsreglereinheit, die man auch als Positioner bezeichnen könnte und deren Steuerelektronik über eine Regelungsfunktionalität verfügt, um den Stellantrieb mit geregelter Betriebsweise betreiben zu können, insbesondere mit einer Positionsregelung der beweglichen Antriebseinheit. In diesem Fall verfügt die Steuerelektronik zweckmäßigerweise über einen Sollwerteingang, über den sie an eine externe elektronische Steuereinrichtung angeschlossen sein kann oder ist, die Sollwerte vorgeben kann, hinsichtlich derer die Stellungsreglereinheit den angeschlossenen Stellantrieb positionsmäßig regelt.

Die elektrisch betätigbare Steuerventileinrichtung kann sich aus nur einem einzigen Steuerventil oder aus einer Gruppe von Steuerventilen zusammensetzen. Die Steuerventileinrichtung hat bevorzugt eine stetige Funktionscharakteristik oder ist für einen pulsweitenmodulierten Betrieb ausgelegt. Sie kann für eine direkte Betätigung durch die seitens der Steuerelektronik bereitgestellten Steuersignale ausgebildet sein oder kann auch von einer elektropneumatisch vorgesteuerten Bauart sein. Es ist von Vorteil, wenn die Steuerungseinheit als Vorsteuerstufe einen e-p-Wandler enthält, der insbesondere nach dem Düse-Prallplatte-Prinzip arbeitet.

Nachfolgend wird die Erfindung anhand der beiliegenden Zeichnung näher erläutert. In dieser zeigen:
- Figur 1: in einer isometrischen Darstellung eine bevorzugte Ausführungsform der erfindungsgemäßen Prozesssteuervorrichtung, die über ein Prozessventil verfügt, das einen Stellantrieb aufweist, an den eine elektropneumatische Steuereinheit angebaut ist,
- Figur 2: die Prozesssteuervorrichtung aus Figur 1 in einem außermittigen Längsschnitt, wobei eine Antriebseinheit des Stellantriebes nur strichpunktiert angedeutet ist,
- Figur 3: den in Figur 2 strichpunktiert umrahmten Ausschnitt III in einer vergrößerten Darstellung,

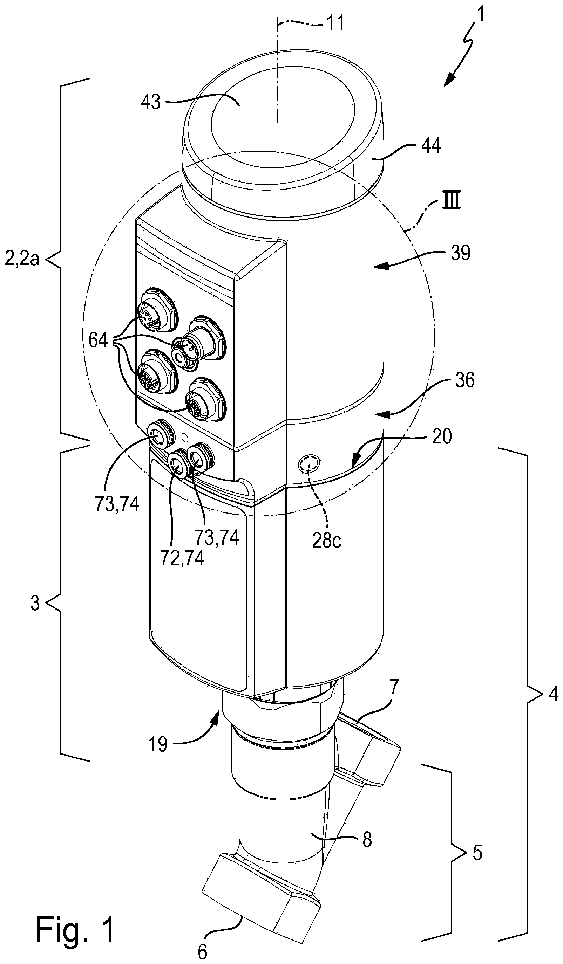

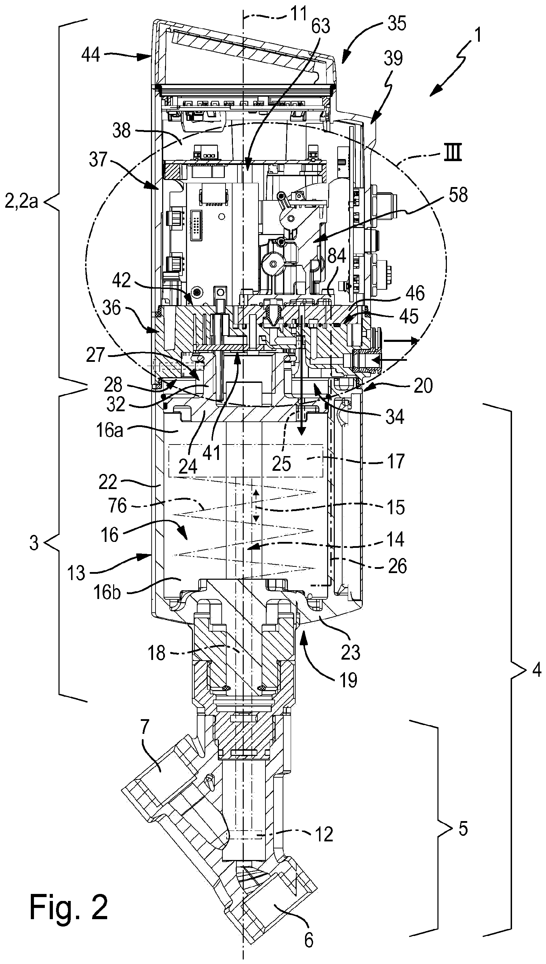

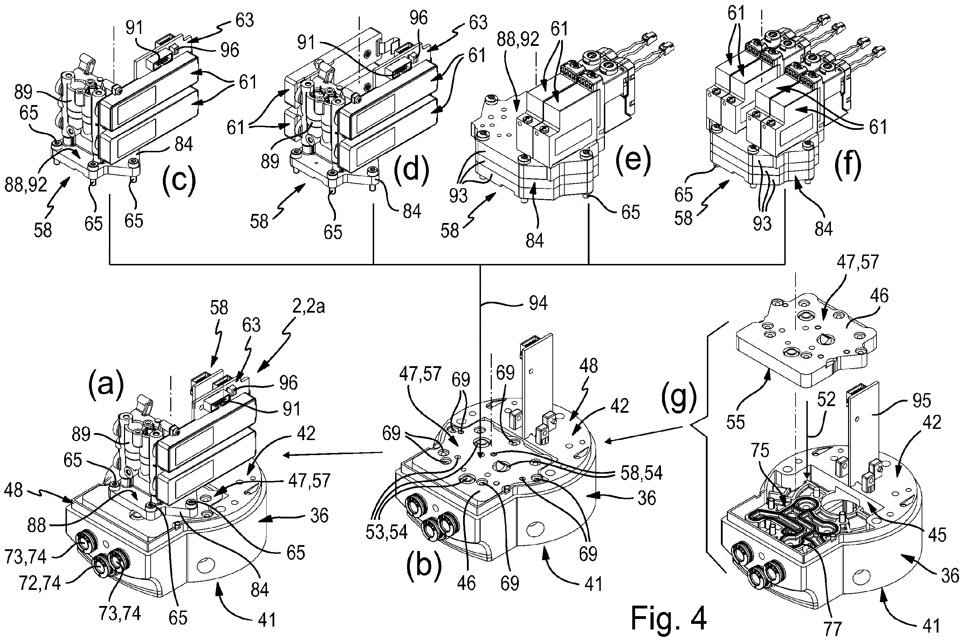

- Figur 4: in einer isometrischen Darstellung eine bevorzugte Ausführungsform der in die Prozesssteuervorrichtung integrierten elektropneumatischen Steuereinheit entsprechend des in Figuren 1 und 2 strichpunktiert umrahmten Ausschnitts III, wobei allerdings Bestandteile eines Gehäuses der Steuereinheit zur Sichtbarmachung von Details der Steuereinheit nicht gezeigt sind, wobei in Figur 4(a) die zusammengebaute Steuereinheit ersichtlich ist, die Figur 4(b)eine gemäß Figur 4(g) aus einem Befestigungsmodul und einer Schnittstellenplatte zusammengesetzte Baueinheit zeigt und die Figuren 4(c), 4(d), 4(e) und 4(f) verschiedene unterschiedliche Typen von Steuerventileinrichtungen zeigen, die mit der Baueinheit gemäß Figur 4(b) kombinierbar sind, wobei die Steuereinheit gemäß Figur 4(a) eine Kombination der Komponenten gemäß Figur 4(b) und 4(c) darstellt, und
- Figur 5: eine perspektivische Explosionsdarstellung der Steuereinheit gemäß Figur 4(a).

Die in ihrer Gesamtheit mit Bezugsziffer 1 bezeichnete Prozesssteuervorrichtung enthält eine elektropneumatische Steuereinheit 2. Diese Steuereinheit 2 ist ausgebildet, um einen pneumatischen Stellantrieb 3 zum Zwecke seiner Betätigung ansteuern zu können. Der Stellantrieb 3 ist bevorzugt auch ein Bestandteil der Prozesssteuervorrichtung 1.

Der Stellantrieb 3 ist zweckmäßigerweise Bestandteil eines Prozessventils 4. Zu dem Prozessventil 4 gehört auch noch eine Ventilarmatur 5. Das Prozessventil 4 ist zweckmäßigerweise in seiner Gesamtheit auch ein Bestandteil der Prozesssteuervorrichtung 1.

Die Ventilarmatur 5 hat wenigstens zwei Armaturenanschlüsse 6, 7 zur Eingliederung in den Verlauf einer Rohrleitung und besitzt ein in einem Armaturengehäuse 8 beweglich angeordnetes Ventilglied 12, das in unterschiedlichen Stellungen positionierbar ist, um eine Fluidverbindung zwischen den beiden Armaturenanschlüssen 6, 7 abzusperren oder mit variablem Querschnitt freizugeben.

Der pneumatische Stellantrieb 3 hat ein Antriebsgehäuse 13, das mit einer Vorderseite 19 voraus an das Armaturengehäuse 8 angebaut ist. In dem Antriebsgehäuse 13 erstreckt sich eine bezüglich des Antriebsgehäuses 13 bewegliche Antriebseinheit 14, die mit dem Ventilglied 12 bewegungsgekoppelt ist und die durch pneumatische Ansteuerung des Stellantriebes 3 zu einer durch einen Doppelpfeil angedeuteten linearen Antriebsbewegung 15 veranlasst werden kann, durch die die Stellung des Ventilgliedes 12 verändert werden kann.

Bei dem Stellantrieb 3 handelt es sich bevorzugt um einen Linearantrieb. Die Antriebsbewegung 15 ist dabei eine der Achsrichtung einer Hauptachse 11 folgende Linearbewegung. Das Antriebsgehäuse 13 hat eine sich in der Achsrichtung der Hauptachse 11 erstreckende Längsgestalt, wobei seine Längsachse bevorzugt mit der Hauptachse 11 identisch ist.

Bei einem ebenfalls nicht illustrierten Ausführungsbeispiel ist der Stellantrieb 3 als ein Drehantrieb ausgebildet. Dies insbesondere dann, wenn es sich bei dem zu betätigenden Ventilglied 12 um einen Drehschieber handelt.

Das Antriebsgehäuse 13 umschließt einen Gehäuseinnenraum 16, der durch ein zumindest partiell in der Achsrichtung der Hauptachse 11 bewegliches Antriebsglied 17 in zwei Arbeitskammern unterteilt ist, und zwar in eine der Vorderseite 19 zugeordnete zweite Arbeitskammer 16b und in eine erste Arbeitskammer 16a, die der der Vorderseite 19 entgegengesetzten Rückseite 20 des Antriebsgehäuses 13 zugeordnet ist.

Über eine sich in der Achsrichtung der Hauptachse 11 erstreckende Spindel 18 oder ein anderes Koppelglied ist das Antriebsglied 17 antriebsmäßig und insbesondere fest mit dem Ventilglied 12 verbunden. Die Spindel 18 ragt an der Vorderseite 19 aus dem Antriebsgehäuse 13 heraus und taucht in das Armaturengehäuse 8 ein, wo sie mit dem Ventilglied 12 zusammenwirkt.

Das Antriebsglied 17 ist beim Ausführungsbeispiel ein gleitverschieblich in dem Gehäuseinnenraum 16 angeordneter Kolben. Er ist mit Dichtungsmitteln versehen, die unter Abdichtung an der Innenumfangsfläche eines sich in der Achsrichtung der Längsachse 11 erstreckenden rohrförmigen Gehäuseabschnittes 22 des Antriebsgehäuses 13 gleitverschieblich anliegt. Bei einem nicht illustrierten Ausführungsbeispiel ist als Antriebsglied 17 anstelle eines insgesamt beweglichen Antriebskolbens eine von einer zumindest partiell elastisch verformbaren Membran gebildete Antriebsmembran vorgesehen.

Das Antriebsgehäuse 13 hat an seiner Vorderseite 19 eine von der Antriebseinheit 14 linear beweglich durchsetzte vordere Gehäusewand 23. Diese vordere Gehäusewand 23 ist insbesondere einstückig mit dem rohrförmigen Gehäuseabschnitt 22 ausgebildet. Im Bereich der Rückseite 20 verfügt das Antriebsgehäuse 13 über eine rückwärtige Gehäusewand 24, die unter Abdichtung an dem rohrförmigen Gehäuseabschnitt 22 befestigt ist und gemeinsam mit diesem rohrförmigen Gehäuseabschnitt 22 und der vorderen Gehäusewand 23 den Gehäuseinnenraum 16 begrenzt. Bevorzugt ist die rückwärtige Gehäusewand 24 von der Rückseite 20 her ein Stück weit axial in den rohrförmigen Gehäuseabschnitt 22 eingesteckt. Ein nur schematisch angedeuteter Fluidkanal, der der besseren Unterscheidung wegen als erster Antriebsgehäusekanal 25 bezeichnet sei, durchsetzt die rückwärtige Gehäusewand 24 oder einen anderen Gehäusebestandteil und mündet in die erste Arbeitskammer 16a ein.

Ein ebenfalls nur schematisch strichpunktiert angedeuteter weiterer Fluidkanal, der als zweiter Antriebsgehäusekanal 26 bezeichnet sei, verläuft in der Wandung des Antriebsgehäuses 13 und mündet insbesondere im Bereich der vorderen Gehäusewand 23 in die zweite Arbeitskammer 16b ein.

Beide Antriebsgehäusekanäle 25, 26 münden außerdem im Bereich der Rückseite 20 an dem Antriebsgehäuse 13 aus, so dass von dieser Rückseite 20 her ein von Druckluft gebildetes Antriebsfluid durch die Antriebsgehäusekanäle 25, 26 hindurch gesteuert hindurchführbar ist, um das Antriebsglied 17 zu beaufschlagen und zum Zwecke einer Positionierung der Antriebseinheit 14 zu der Antriebsbewegung 15 anzutreiben.

An dem Antriebsgehäuse 13 ist eine Kopplungs-Schnittstelle 27 ausgebildet, an der die Steuereinheit 2 mittels einer an ihr ausgebildeten und an die Kopplungs-Schnittstelle 27 angepassten Befestigungs-Schnittstelle 28 in bevorzugt lösbarer Weise befestigt ist. Die Kopplungs-Schnittstelle 27 befindet sich gemäß dem Ausführungsbeispiel zweckmäßigerweise an der Rückseite 20 des Antriebsgehäuses 13. Exemplarisch ist sie gemeinsamt vom rückwärtigen Endbereich des rohrförmigen Gehäuseabschnittes 22 und von der rückwärtigen Gehäusewand 24 gebildet, wobei letztere einen axialen Kopplungsfortsatz 32 aufweisen kann, der rückseitig axial über den rohrförmigen Gehäuseabschnitt 22 hinausragt. Dieser axiale Kopplungsfortsatz 32 hat beim Ausführungsbeispiel einen radial abstehenden Kopplungsbund 33.

Die Steuereinheit 2 erstreckt sich in Achsrichtung der Hauptachse 11 und hat zwei einander entgegengesetzt in der Hauptachsrichtung orientierte Stirnseiten, die zur besseren Unterscheidung als Unterseite 34 und Oberseite 35 bezeichnet seien. Die Unterseite 34 ist dem Stellantrieb 3 zugewandt. Den unteren Abschluss der Steuereinheit 2 bildet ein bevorzugt plattenförmig ausgebildetes Befestigungsmodul 36, an dessen dem Stellantrieb 3 zugewandter Unterseite 41 die Befestigungsschnittstelle 28 der Steuereinheit 2 ausgebildet ist.

Bevorzugt bildet das Befestigungsmodul 36 ein insbesondere als Abschlusswand ausgebildetes Gehäuseunterteil eines Steuereinheit-Gehäuses 37, das einen Gehäuseinnenraum 38 umschließt und diesen zur Umgebung hin abschirmt. Ein Gehäuseoberteil 39 des Steuereinheit-Gehäuses 37 ist zweckmäßigerweise an eine in der Achsrichtung der Hauptachse 11 von dem Stellantrieb 3 abgewandte Oberseite 42 des Befestigungsmoduls 36 angesetzt und unter Abdichtung daran fixiert.

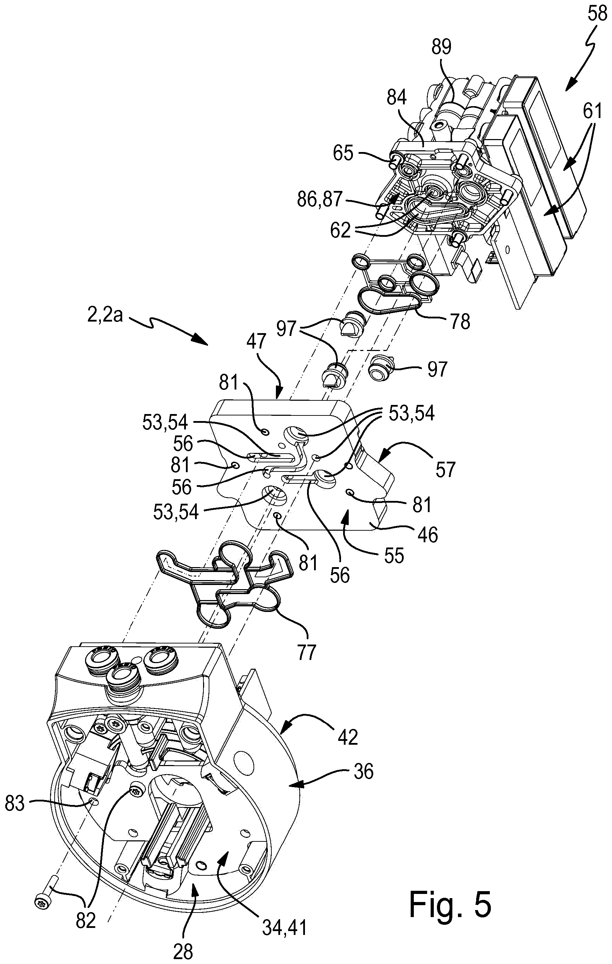

In Figur 4(a) und in Figur 5 ist die Steuereinheit 2 ohne das Gehäuseoberteil 39 abgebildet.

Das Gehäuseoberteil 39 verfügt im Bereich der Oberseite 35 zweckmäßigerweise über einen zur Anzeige von Betriebsinformationen der Prozesssteuervorrichtung 1 ausgebildeten Anzeigebereich 43, der zweckmäßigerweise mit einem oberen Gehäusedeckel 44 des Gehäuseoberteils 39 kombiniert ist, der abnehmbar oder auch nicht abnehmbar ausgebildet sein kann.

Die Befestigungs-Schnittstelle 28 des Befestigungsmoduls 36 enthält beim Ausführungsbeispiel einen zu der Hauptachse 11 konzentrischen ringförmigen Vorsprung 28a, der am rückwärtigen Endbereich des rohrförmigen Gehäuseabschnittes 22 anliegt und ferner eine Ausnehmung 28b, in die der axiale Kopplungsfortsatz 32 der rückwärtigen Gehäusewand 24 eintaucht. Außerdem gehören zu der Befestigungsschnittstelle 28 mehrere, und bevorzugt drei, über den Umfang verteilte und nur zum Teil angedeutete Befestigungsschrauben 28c, die einen die Ausnehmung 28b umrahmenden ringförmigen Abschnitt des Befestigungsmoduls 36 radial durchsetzen und den Kopplungsbund 33 des Kopplungsfortsatzes 32 an der dem Stellantrieb 3 zugewandten Axialseite untergreifen. Dementsprechend gehören beim Ausführungsbeispiel der rückwärtige Endbereich des rohrförmigen Gehäuseabschnittes 22 und der axiale Kopplungsfortsatz 32 zu der Kopplungs-Schnittstelle 27.

Die gezeigte Ausführungsform einer Kopplungs-Schnittstelle 27 und einer daran angepassten Befestigungs-Schnittstelle 28 ist zwar besonders vorteilhaft, kann aber durch eine andere Ausführungsform ersetzt werden, beispielsweise durch eine Bajonettverbindung.

Das Befestigungsmodul 36 ist an seiner Oberseite 42 mit einer Aufnahmevertiefung 45 versehen. Die Grundfläche dieser Aufnahmevertiefung 45 ist, wie insbesondere aus Figur 4(b) hervorgeht, kleiner als die Gesamtoberfläche des Befestigungsmoduls 36 an seiner Oberseite 42.

In die Aufnahmevertiefung 45 ist eine bezüglich des Befestigungsmoduls 36 gesondert ausgebildete Schnittstellenplatte 46 eingesetzt. Die Schnittstellenplatte 46 ist bevorzugt starr ausgebildet. Sie besteht insbesondere aus Metall, während das Befestigungsmodul 36 bevorzugt aus einem Kunststoffmaterial besteht.

Bevorzugt entspricht die in Achsrichtung der Hauptachse 11 gemessene Höhe der Schnittstellenplatte 46 der entsprechend gemessenen Tiefe der Aufnahmevertiefung 45, so dass die Schnittstellenplatte 46 insbesondere vollständig in der Aufnahmevertiefung 45 aufgenommen ist und mit ihrer Oberseite 47 bündig mit den die Aufnahmevertiefung 45 umrahmenden Flächenabschnitten der Oberseite 42 des Befestigungsmoduls 36 verläuft.

Bei einem nicht illustrierten Ausführungsbeispiel sitzt die Schnittstellenplatte 46 auf einer unvertieften Oberseite 42 des Befestigungsmoduls 36. Demgegenüber hat das illustrierte Ausführungsbeispiel den Vorteil, dass die aus dem Befestigungsmodul 36 und der Schnittstellenplatte 46 zusammengesetzte Baueinheit keine größere Höhe hat wie das Befestigungsmodul 36 selbst.

Zur Vereinfachung sei im Folgenden die aus dem Befestigungsmodul 36 und der daran fixierten Schnittstellenplatte 46 bestehende Baueinheit als Basiseinheit 48 der Steuereinheit 2 bezeichnet. In Figur 4(g) sind das Befestigungsmodul 36 und die Schnittstellenplatte 46 vor dem Zusammenbau gezeigt. Der Zusammenbau erfolgt durch in der Hauptachsrichtung gemäß Pfeil 52 erfolgendes Einsetzen der Schnittstellenplatte 46 in die Aufnahmevertiefung 45. Die zusammengebaute Basiseinheit 48 ist aus Figur 4(b) ersichtlich.

Die Schnittstellenplatte 46 ist von mehreren von Druckluft durchströmbaren Fluidkanälen 53 durchsetzt, die gemeinsam ein Fluidkanalsystem bilden, das zur besseren Unterscheidung als Schnittstellenplatten-Fluidkanalsystem 54 bezeichnet sei. Dieses Schnittstellenplatten-Fluidkanalsystem 54 mündet sowohl an der dem Befestigungsmodul 36 abgewandten Oberseite 47 also auch an der dem Befestigungsmodul 36 zugewandten Unterseite 55 der Schnittstellenplatte 46 aus. Bevorzugt durchsetzen sämtliche Fluidkanäle 53 des Schnittstellen-Fluidkanalsystems 54 die Schnittstellenplatte 46 in ihrer Höhenrichtung von der Oberseite 47 zu der Unterseite 55. Die daraus resultierenden Mündungsmuster an der Oberseite 47 und an der Unterseite 55 können voneinander abweichen, sind aber vorzugsweise identisch zueinander. Wie aus Figur 5 ersichtlich ist, können in die Unterseite der Schnittstellenplatte 46 nutartige Vertiefungen 56 eingebracht sein, um eine besondere Fluidführung im Übergangsbereich zwischen der Schnittstellenplatte 46 und dem Befestigungsmodul 36 zu erzielen.

An der rechtwinkelig zur Höhenrichtung der Schnittstellenplatte 46 orientierten Seitenfläche der Schnittstellenplatte 46 mündet das Schnittstellen-Fluidkanalsystem 54 nicht aus.

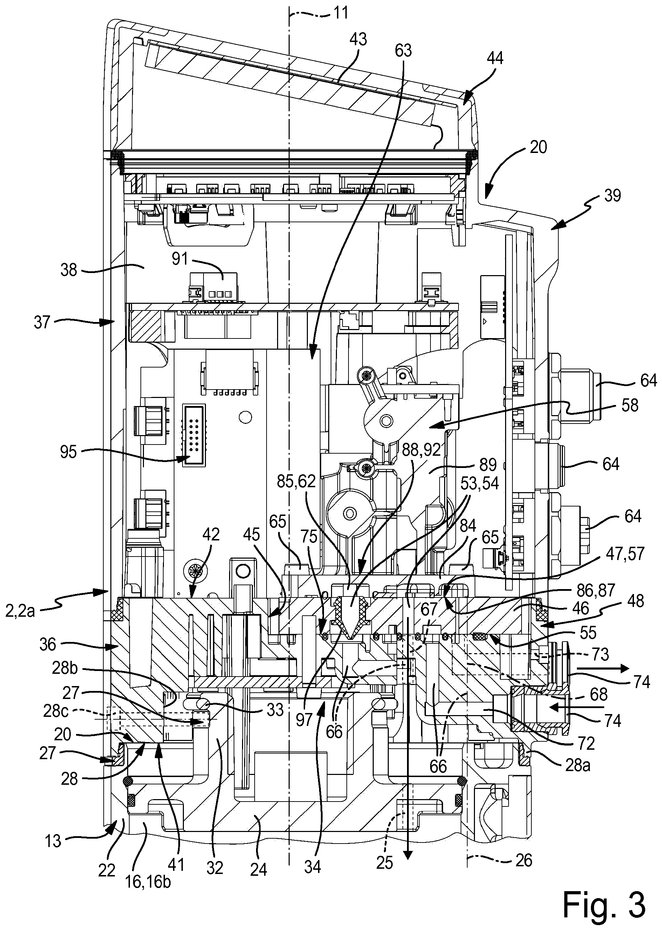

Die Oberseite 47 der Schnittstellenplatte 46 definiert eine mechanisch-pneumatische Montage-Schnittstelle 57, an der in bevorzugt lösbarer Weise eine elektrisch betätigbare Steuerventileinrichtung 58 der Steuereinheit 2 montiert ist. In Figur 4 sind in den Abbildungen (c), (d), (e) und (f) beispielhaft vier mögliche Ausführungsformen von Steuerventileinrichtungen 58 gezeigt, die alternativ zueinander an der Montage-schnittstelle 57 montiert sein können. Die in Figur 4 illustrierten Steuerventileinrichtungen 58 unterscheiden sich in ihrer Funktionalität und/oder in ihrem Aufbau voneinander, so dass man sagen kann, dass es sich hier um mehrere Steuerventileinrichtungen 58 unterschiedlichen Typs handelt, d.h. um unterschiedliche Steuerventileinrichtungstypen. Bei dem in den Figuren 1 bis 3 und 5 illustrierten Ausführungsbeispiel ist die Schnittstellenplatte 46 mit einer Steuerventileinrichtung 58 des in Figur 4(c) abgebildeten Steuerventileinrichtungstyps bestückt.

Die Steuerventileinrichtung 58 enthält mindestens ein elektrisch betätigbares Steuerventil 61. Den illustrierten Ausführungsbeispielen ist gemeinsam, dass jede Steuerventileinrichtung 58 über mehrere Steuerventile 61 verfügt. Bei dem Steuerventileinrichtungstyp gemäß Figuren 4(c) und 4(e) sind zwei Steuerventile 61 vorhanden, während die Steuerventileinrichtungstypen 58 gemäß den Abbildungen 4(d) und 4(f) mit vier Steuerventilen 61 ausgestattet sind.

Die Steuerventile 61 der Steuerventileinrichtungstypen gemäß Figuren 4(c) und 4(d) sind als Piezoventile ausgebildet, insbesondere auf der Basis von Piezobiegewandlern. Im Unterschied dazu sind die Steuerventile 61 der Steuerventileinrichtungstypen gemäß Figuren 4(e) und 4(f) als Magnetventile ausgeführt. Jede Steuerventileinrichtung 58 kann auch eine Kombination aus unterschiedlichen Steuerventiltypen enthalten. Bei den Steuerventilen 61 kann es sich um sogenannte direktbetätigte Steuerventile 61 handeln oder auch um elektropneumatisch vorgesteuerte Steuerventile 61. Letzteres hat den Vorteil, dass mit geringer Antriebsleistung hohe Durchflussraten an Druckluft steuerbar sind.

Die Steuerventileinrichtung 58 ist mit einem sich aus mehreren Ventilkanälen zusammensetzenden internen Steuerventil-Fluidkanalsystem 62 ausgestattet, das in der Zeichnung nur partiell angedeutet ist. Die Steuerventile 61 sind abhängig von ihrer Schaltstellung in der Lage, den Fluiddurchgang durch das Steuerventil-Fluidkanalsystem 62 zu steuern und dabei insbesondere einen Fluiddurchtritt schaltstellungsabhängig zu verhindern oder zuzulassen. Die Steuerventile 61 können als Schaltventile oder als Stetigventile bzw. Proportionalventile ausgeführt sein.

Die zur Vorgabe ihres Betriebszustandes erforderlichen elektrischen Steuersignale erhält die Steuerventileinrichtung 58 von einer bevorzugt auf einer oder mehreren Platinen aufgebauten Steuerelektronik 63, die zweckmäßigerweise in dem Gehäuseinnenraum 38 untergebracht und an dem Befestigungsmodul 36 fixiert ist. Die elektrischen Verbindungsleitungen zwischen der Steuerelektronik 63 und der Steuerventileinrichtung 58 sind nicht abgebildet. Ebenfalls nicht abgebildet sind elektrische Verbindungsleitungen zwischen der Steuerelektronik 63 und elektromechanischen Schnittstellenmitteln 64, die in von außen her zugänglicherweise am Steuereinheit-Gehäuse 37 angeordnet sind und über die eine elektrische Verbindung zu einer nicht weiter abgebildeten externen elektronischen Steuereinrichtung möglich ist.

Die Steuerventileinrichtung 58 ist mittels Befestigungsschrauben 65 an der Schnittstellenplatte 46 befestigt, insbesondere in lösbarer Weise. Dabei kommuniziert das Steuerventil-Fluidkanalsystem 62 zuordnungsrichtig mit dem Schnittstellenplatten-Fluidkanalsystem 54, so dass ein Fluidübertritt zwischen diesen beiden Komponenten möglich ist.

Es liegt darüber hinaus eine Fluidverbindung zwischen dem Schnittstellenplatten-Fluidkanalsystem 54 und einem sich aus mehreren Fluidkanälen zusammensetzenden, das Befestigungsmodul 36 durchsetzenden Befestigungsmodul-Fluidkanalsystem 66 vor. Letzteres umfasst bei dem illustrierten Ausführungsbeispiel zwei Antriebskanäle 67, 68, die derart an der Unterseite 41 des Befestigungsmoduls 36 ausmünden, dass sie mit jeweils einem der beiden Antriebsgehäusekanäle 25, 26 des Stellantriebs 3 in Fluidverbindung stehen.

Die Fluidkanäle des Befestigungsmodul-Fluidkanalsystems 66 enthalten auch einen Versorgungskanal 72 und mindestens einen Entlüftungskanal 73, wobei bevorzugt zwei solcher Entlüftungskanäle 73 vorhanden sind. Sowohl der Versorgungskanal 72 als auch jeder Entlüftungskanal 73 mündet über eine eigene Anschlussöffnung 74, der zweckmäßigerweise eine Leitungsverbindungseinrichtung zugeordnet ist, zu einer Außenfläche des Befestigungsmoduls 36 aus.

Die vorgenannten Fluidkanäle 67, 68, 72, 73, 74 des Befestigungsmodul-Fluidkanalsystems 66 münden auch zu einer an der Oberseite 42 des Befestigungsmoduls 36 ausgebildeten Montagefläche 75 aus, an der die Schnittstellenplatte 46 mit ihrer Unterseite 55 anliegt. Die Montagefläche 75 ist beim Ausführungsbeispiel von der Grundfläche der Aufnahmevertiefung 45 gebildet. Das Mündungsmuster des Befestigungsmodul-Fluidkanalsystems 66 an der Montagefläche 75 und das Mündungsmuster der an der Unterseite 55 der Schnittstellenplatte 46 vorhandenen Mündungen des Schnittstellenplatten-Fluidkanalsystems 54 sind so aufeinander angepasst, dass die beiderseitigen Fluidkanäle zuordnungsrichtig miteinander kommunizieren. Somit ist gewährleistet, dass sowohl die beiden Antriebskanäle 67, 68 als auch der Versorgungskanal 72 und jeder Entlüftungskanal 73 mit der an der Schnittstellenplatte 46 montierten Steuerventileinrichtung 58 kommunizieren.

Im Betrieb der Prozesssteuervorrichtung 1 ist der Versorgungskanal 72 über eine nicht weiter abgebildete Fluidleitung mit einer externen Druckluftquelle verbunden. Jeder Entlüftungskanal 73 kommuniziert über die zugeordnete Anschlussöffnung 74 mit der Atmosphäre. Unter Vermittlung der Steuerelektronik 63 ist die Steuerventileinrichtung 58 derart ansteuerbar, dass jeder der beiden Antriebskanäle 67, 68 bei gleichzeitiger Abtrennung vom jeweils anderen Kanal mit entweder dem Versorgungskanal 72 oder dem Entlüftungskanal 73 verbunden ist. Außerdem kann jeder Antriebskanal 67, 68 gleichzeitig sowohl vom Versorgungskanal 72 als auch vom Entlüftungskanal 73 abgesperrt werden. Auf diese Weise ist eine gesteuerte Fluidbeaufschlagung der beiden Arbeitskammern 16a, 16b des Stellantriebes 3 möglich mit dem Resultat einer Bewegung und/oder Positionierung der Antriebseinheit 14.

Bei dem anhand der Figuren 1 bis 3 illustrierten Ausführungsbeispiel ist der pneumatische Stellantrieb 3 als ein sogenannter einfachwirkender Stellantrieb konzipiert. Die Bewegung und Positionierung der Antriebseinheit 14 resultiert hier ausschließlich aus einer gesteuerten Fluidbeaufschlagung der ersten Arbeitskammer 16a, während eine Gegenkraft durch eine strichpunktiert angedeutete Rückstellfeder 76 aufgebracht wird, die in der zweiten Arbeitskammer 16b sitzt. In diesem Fall ist der mit der zweiten Arbeitskammer 16b kommunizierende zweite Antriebsgehäusekanal 26 ebenso funktionslos wie der mit ihm kommunizierende Antriebskanal 68 des Befestigungsmoduls 36. Diese Anordnung kann auch vertauscht sein.

Ein zwischen der Unterseite 55 der Schnittstellenplatte 46 und der Montagefläche 75 des Befestigungsmoduls 36 zwischengefügtes, bevorzugt als Formdichtung ausgebildetes maskenartiges Dichtungselement 77, das insbesondere aus einem gummielastischen Material besteht, umrahmt die sich gegenüberliegenden Kanalmündungen und sorgt für eine zur Umgebung hin fluiddichte Verbindung zwischen dem Schnittstellenplatten-Fluidkanalsystem 54 und dem Befestigungsmodul-Fluidkanalsystem 66.

Ein bevorzugt ebenfalls maskenartig ausgebildetes weiteres Dichtungselement 78 ist zwischen die Montage-Schnittstelle 57 der Schnittstellenplatte 46 und die Steuerventileinrichtung 58 zwischengefügt, um die Fluidverbindung zwischen dem Schnittstellenplatten-Fluidkanalsystem 54 und dem Steuerventil-Fluidkanalsystem 62 zur Umgebung hin abzudichten.

Die Schnittstellenplatte 46 ist zweckmäßigerweise von der Unterseite 34 des Befestigungsmoduls 36 her mit dem Befestigungsmodul 36 verschraubt und dadurch an die Montagefläche 75 angepresst. Die Schnittstellenplatte 46 hat zu diesem Zweck mehrere zu ihrer Unterseite 55 hin ausmündende, bevorzugt sacklochartig ausgebildete Befestigungsbohrungen 81, in die eine von mehreren Befestigungsschrauben 82 eingeschraubt ist, die von der Unterseite 41 her durch ein Durchgangsloch 83 des Befestigungsmoduls 36 hindurchgesteckt ist. Jede dieser Befestigungsschrauben 82, von denen in Figur 5 nur eine abgebildet ist, stützt sich mit ihrem Schraubenkopf an der Unterseite 41 des Befestigungsmoduls 36 ab.

Die Steuerventileinrichtung 58 ist zweckmäßigerweise als eine zur Montage an der Schnittstellenplatte 46 einheitlich handhabbare Baueinheit ausgebildet, so dass man von einer Steuerventileinheit sprechen kann. Dabei ist es vorteilhaft, wenn die Steuerventileinrichtung 58 gemäß den illustrierten Ausführungsbeispielen über eine starre Tragplatte 84 verfügt und ausschließlich über diese Tragplatte 84 an die Schnittstellenplatte 46 angesetzt und an der Schnittstellenplatte 46 befestigt ist.

Die Tragplatte 84 ist von einem Tragplatten-Fluidkanalsystem 85 durchsetzt, bei dem es sich um ein Teilsystem des Steuerventil-Fluidkanalsystems 62 handelt und das mit unmittelbar in den mindestens einen Steuerventil 61 ausgebildeten Ventilkanälen kommuniziert.

Die Tragplatte 84 weist an ihrer der Schnittstellenplatte 46 zugewandten Unterseite 86 eine mechanisch-pneumatische Anbau-Schnittstelle 87 auf, die bei an der Schnittstellenplatte 46 montierter Steuerventileinrichtung 58 mit der Montage-Schnittstelle 57 der Schnittstellenplatte 46 gekoppelt ist. Die Fluidkanäle des Steuerventil-Fluidkanalsystems 62 bzw. des Tragplatten-Fluidkanalsystems 85 münden an der Anbau-Schnittstelle 87 so aus, dass sie mit gegenüberliegenden Kanalmündungen des Schnittstellenplatten-Fluidkanalsystems 54 kommunizieren.

Zur Befestigung der Tragplatte 84 und somit der gesamten Steuerventileinrichtung 58 an der Schnittstellenplatte 46, befindet sich an der Montage-Schnittstelle 57 eine Mehrzahl von jeweils mit einem Innengewinde versehener Befestigungsbohrungen 69. Die Tragplatte 84 hat in ihrer Höhenrichtung durchgehende Durchgangslöcher, in die von oben her die weiter oben schon angesprochenen Befestigungsschrauben 65 eingeführt sind, so dass sie sich mit ihrem Schraubenkopf an der Oberseite 88 der Tragplatte 84 abstützen. Mit ihrem unten aus der Tragplatte 84 herausragenden Gewindeschaft sind die Befestigungsschrauben 65 in jeweils eine der Befestigungsbohrungen 69 der Schnittstellenplatte 57 eingeschraubt, wodurch die Tragplatte 84 und folglich die gesamte Steuerventileinrichtung 58 in der Achsrichtung der Hauptachse 11 mit der Schnittstellenplatte 46 verspannt ist.

Die Steuerventileinrichtungen 58 der unterschiedlichen Steuerventileinrichtungstypen können sich in der Anzahl und Verteilung ihrer zur Aufnahme von Befestigungsschrauben 65 vorgesehenen Durchgangslöcher unterscheiden. Es liegen dann unterschiedliche Schraubenverteilungsmuster bei den unterschiedlichen Steuerventileinrichtungstypen vor. Bei der Ausgestaltung der Schnittstellenplatte 46 ist in diesem Zusammenhang zweckmäßigerweise vorgesehen, dass teils die gleichen und teils unterschiedliche Befestigungsbohrungen 69 zur Kopplung mit den Befestigungsschrauben 65 genutzt werden. Es besteht allerdings auch die Möglichkeit, zur Montage unterschiedlicher Steuerventileinrichtungstypen stets unterschiedliche Befestigungsbohrungen 69 des Befestigungsmoduls 36 zu nutzen.

Gemäß den Steuerventileinrichtungen 58 der in Figuren 4(e) und 4(f) illustrierten Steuerventileinrichtungstypen können mehrere Steuerventile 68 individuell an der Tragplatte 84 montiert sein. Ebenso besteht die anhand der in Figuren 4(c) und 4(d) illustrierten Steuerventileinrichtungstypen ersichtliche Möglichkeit, mehrere und insbesondere sämtliche Steuerventile 61 der Steuerventileinrichtung 58 an einem gemeinsamen Grundkörper 89 vorzusehen und unter Vermittlung dieses gemeinsamen Grundkörpers 89 gemeinsam an der Tragplatte 84 zu montieren.

Die Tragplatte 84 kann separat zu oder einstückig mit dem vorgenannten Grundkörper 89 ausgebildet sein.

Bevorzugt verfügt die Tragplatte 84 an ihrer Oberseite 88 über eine Bestückungsfläche 92, an der die Steuerventile 61 individuell oder unter Vermittlung eines mehreren Steuerventilen 61 gemeinsam zugeordneten Grundkörpers 89 befestigt sind. Die Befestigung erfolgt zweckmäßigerweise mittels einer Schraubverbindung.

Gemäß den in Figuren 4(e) und 4(f) gezeigten Ausführungsbeispielen kann die Tragplatte 84 in ihrer Höhenrichtung modular aufgebaut sein und sich aus mehreren in ihrer Höhenrichtung aufeinandergestapelten plattenförmigen Tragplattenmodulen 93 zusammensetzen, die auch jeweils plattenförmig ausgebildet sind. Gemäß den anderen illustrierten Ausführungsbeispielen kann die Tragplatte 84 aber auch als einstückiges Bauteil ausgebildet sein.

Die Steuerventileinrichtung 58 der in den Figuren 4(c) und 4(d) abgebildeten Steuerventileinrichtungstypen haben eine 3/2-Ventilfunktionalität und eignen sich zur Ansteuerung eines einfachwirkenden pneumatischen Stellentriebes 3. Die in Figuren 4(d) und 4(f) abgebildeten Steuerventileinrichtungen 58 sind jeweils von einem Steuerventileinrichtungstyp mit einer 5/3-Ventilfunktionalität, so dass sie sich insbesondere zur Ansteuerung eines doppeltwirkenden pneumatischen Stellantriebes 3 eignen.

Bei der Herstellung der Steuereinheit 2 kann das Befestigungsmodul 36 gemäß Pfeil 94 ausgewählt alternativ mit einer Steuerventileinrichtung 58 jedes der in den Figuren 4(c), 4(d), 4(e) und 4(f) abgebildeten Steuerventileinrichtungstypen bestückt werden.

Mindestens ein Fluidkanal 53 des Schnittstellenplatten-Fluidkanalsystems 54 kann mit einem Rückschlagventil 97 ausgestattet sein. Das Rückschlagventil 97 ist bevorzugt als Baueinheit ausgebildet und nach Art einer Patrone in den betreffenden Fluidkanal 53 eingesetzt. Bevorzugt ist das Rückschlagventil 97 ein gummielastisches Bauteil, das durch Einschnappen im zugeordneten Fluidkanal 53 fixiert ist. Exemplarisch ist das Schnittstellenplatten-Fluidkanalsystem 54 mit insgesamt drei Rückschlagventilen 97 bestückt.

Bevorzugt sitzt ein Rückschlagventil 97 in einem mit dem Versorgungskanal 72 kommunizierenden Fluidkanal 53, wobei seine Durchlassrichtung von der zugeordneten Anschlussöffnung 74 wegweist. Ein weiteres Rückschlagventil 97 ist zweckmäßigerweise in einem Fluidkanal 53 angeordnet, der mit einem Entlüftungskanal 73 kommuniziert, wobei die Durchlassrichtung dieses Rückschlagventils 97 zur zugeordneten Anschlussöffnung 74 weist. Bevorzugt dient ein Fluidkanal 53 des Schnittstellenplatten-Fluidkanalsystems 54 zur Entlüftung des Gehäuseinnenraumes 38 des Steuereinheit-Gehäuses 37, der mit einem Entlüftungskanal 73 des Befestigungsmodul-Fluidkanalsystems 66 kommuniziert und in dessen Verlauf ein Rückschlagventil 97 eingeschaltet ist, das in Richtung zu dem Gehäuseinnenraum 38 sperrt und in der Gegenrichtung durchlässt.

Die Steuereinheit 2 verfügt zweckmäßigerweise über eine Regelungsfunktionalität, was beim Ausführungsbeispiel der Fall ist. Dadurch ist ein geregelter und insbesondere positionsgeregelter Betrieb des Stellantriebes 3 möglich. Die Steuereinheit 2 repräsentiert in diesem Fall eine auch als Positioner bezeichenbare Stellungsreglereinheit 2a.

Die Steuerelektronik 63 hat einen Sollwerteingang 91, dem über die elektromechanischen Schnittstellenmittel 64 von außen her Sollwertsignale zuführbar sind, die der gewünschten Sollposition der Antriebseinheit 14 entsprechen. Die Sollwertsignale werden von einer externen elektronischen Steuereinrichtung zur Verfügung gestellt.

Die zur Stellungsregelung erforderliche Kenntnis der IstPosition der Antriebseinheit 14 wird der Steuerelektronik 63 über Rückmeldemittel 95 verschafft, die mit der Antriebseinheit 14 kooperieren und an einen Rückmeldesignaleingang 96 der Steuerelektronik 63 angeschlossen sind. Die Rückmeldemittel 95 sind in der Lage, kontinuierliche Positionsinformationen bezüglich der Antriebseinheit 14 als elektrische Signale an die Steuerelektronik 63 zu liefern. Die Rückmeldemittel 63 sind beispielsweise von einer Wegmesseinrichtung gebildet.

Abhängig vom Vergleichsergebnis zwischen den der Steuerelektronik 63 zugeführten Sollwerten und Istwerten wird die Steuerventileinrichtung 58 durch die Steuerelektronik 63 elektrisch angesteuert, um den pneumatischen Stellantrieb 3 entsprechend zu betätigen.

Bei einer einfacheren Ausführungsform besitzt die Steuerelektronik 63 keine Regelungsfunktionalität, so dass sie nur eine ungeregelte Ansteuerung des Stellantriebes 3 vornehmen kann, wobei als Rückmeldesignale insbesondere singuläre Sensorsignale verarbeitet werden.

## Patentansprüche

1. Prozesssteuervorrichtung, mit einer zur Ansteuerung eines pneumatischen Stellantriebes (3) ausgebildeten elektropneumatischen Steuereinheit (2), die ein Befestigungsmodul (36) aufweist, das an einer Unterseite (34) über eine zur Befestigung an einem Antriebsgehäuse (13) des Stellantriebes (3) ausgebildete Befestigungsschnittstelle (28) verfügt, und die eine an dem Befestigungsmodul (36) fixierte, mindestens ein Steuerventil (61) enthaltende elektrisch betätigbare Steuerventileinrichtung (58) aufweist, die mit mindestens einem das Befestigungsmodul (36) zur fluidischen Verbindung mit dem Stellantrieb (3) durchsetzenden Antriebskanal (67, 68) kommuniziert, wobei die Steuereinheit (2) eine bezüglich des Befestigungsmoduls (36) gesonderte Schnittstellenplatte (46) aufweist, die an dem Befestigungsmodul (36) an dessen von der Befestigungsschnittstelle (28) abgewandten Oberseite (35) montiert ist und die von einem mit dem mindestens einen Antriebskanal (67, 68) des Befestigungsmoduls (36) kommunizierenden Schnittstellenplatten-Fluidkanalsystem (54) durchsetzt ist, wobei die Schnittstellenplatte (46) an ihrer dem Befestigungsmodul (36) abgewandten Oberseite (35) eine mechanisch-pneumatische Montage-Schnittstelle (57) aufweist, an der die Steuerventileinrichtung (58) unter gleichzeitiger Kommunikation mit dem Schnittstellenplatten-Fluidkanalsystem (54) montiert ist, **dadurch gekennzeichnet, dass** das Befestigungsmodul (36) an seiner der Befestigungsschnittstelle (28) abgewandten Oberseite (35) eine Aufnahmevertiefung (45) aufweist, in die die Schnittstellenplatte (46) eingesetzt ist, wobei die Schnittstellenplatte (46) derart vollständig in der Aufnahmevertiefung (45) aufgenommen ist, dass ihre Oberseite (47) bündig mit den die Aufnahmevertiefung (45) umrahmenden Flächenabschnitten der Oberseite (35) des Befestigungsmoduls (36) verläuft.

2. Prozesssteuervorrichtung nach Anspruch 1, **dadurch gekennzeichnet, dass** die Steuerventileinrichtung (58) als eine Baueinheit ausgebildet ist und eine jedes Steuerventil (61) der Steuerventileinrichtung (58) tragende Tragplatte (84) aufweist, die von einem mit dem mindestens einen Steuerventil (61) kommunizierenden Tragplatten-Fluidkanalsystem (85) durchsetzt ist, wobei die Steuerventileinrichtung (58) mittels der Tragplatte (84) derart an der Montage-Schnittstelle (57) der Schnittstellenplatte (46) montiert ist, dass das Tragplatten-Fluidkanalsystem (85) mit dem Schnittstellenplatten-Fluidkanalsystem (54) in Fluidverbindung steht, wobei zweckmäßigerweise die Tragplatte (84) an ihrer der Schnittstellenplatte (46) zugewandten Unterseite (86) eine mit der Montage-Schnittstelle (57) der Schnittstellenplatte (46) gekoppelte, mechanisch-pneumatische Anbau-Schnittstelle (87) aufweist und an ihrer diesbezüglich abgewandten Oberseite das mindestens eine Steuerventil (61) trägt, wobei sie an dieser Oberseite (88) zweckmäßigerweise eine mit dem mindestens einen Steuerventil (61) bestückte Bestückungsfläche (92) aufweist.

3. Prozesssteuervorrichtung nach Anspruch 2, **dadurch gekennzeichnet, dass** die Tragplatte (84) einstückig ausgebildet ist oder modular aufgebaut ist und sich aus mehreren in ihrer Höhenrichtung aufeinandergestapelten plattenförmigen Tragplattenmodulen (93) zusammensetzt.

4. Prozesssteuervorrichtung nach einem der Ansprüche 1 bis 3, **dadurch gekennzeichnet, dass** die Steuerventileinrichtung (58) mehrere Steuerventile (61) aufweist.

5. Prozesssteuervorrichtung nach Anspruch 4 in Verbindung mit Anspruch 2 oder 3, **dadurch gekennzeichnet, dass** die mehreren Steuerventile (61) individuell an der Tragplatte (84) befestigt sind oder über einen gemeinsamen Grundkörper (89) zusammen an der Tragplatte (84) befestigt sind.

6. Prozesssteuervorrichtung nach einem der Ansprüche 1 bis 5, **dadurch gekennzeichnet, dass** alle Fluidkanäle des Schnittstellen-Fluidkanalsystems (54) die Schnittstellenplatte (46) linear in ihrer Höhenrichtung von der Unterseite (55) zur Oberseite (47) durchsetzen, wobei das Mündungsmuster der Fluidkanäle des Schnittstellen-Fluidkanalsystems (54) an der Unterseite (55) und an der Oberseite (47) der Schnittstellenplatte (46) zweckmäßigerweise identisch ist.

7. Prozesssteuervorrichtung nach einem der Ansprüche 1 bis 6, **dadurch gekennzeichnet, dass** die Schnittstellenplatte (46) mittels das Befestigungsmodul (36) von unten her durchsetzender Befestigungsschrauben (82) an dem Befestigungsmodul (36) fixiert ist, wobei jede Befestigungsschraube (82) zweckmäßigerweise in eine sacklochartige Befestigungsbohrung (81) der Schnittstellenplatte (46) eingeschraubt ist.

8. Prozesssteuervorrichtung nach einem der Ansprüche 1 bis 7, **dadurch gekennzeichnet, dass** sie über mehrere Steuerventileinrichtungen (58) unterschiedlichen Typs verfügt, die sich zumindest in ihrer Funktionalität und/oder in ihrem Aufbau voneinander unterscheiden, wobei die Montage-Schnittstelle (57) der Schnittstellenplatte (46) zur alternativen Montage einer Steuerventileinrichtung (58) jedes vorhandenen Steuerventileinrichtungstyps ausgebildet ist, wobei zweckmäßigerweise die Steuerventileinrichtung (58) eines ersten Steuerventileinrichtungstyps mindestens ein Piezoventil als ein Steuerventil (61) enthält und die Steuerventileinrichtung (58) eines zweiten Steuerventileinrichtungstyps mindestens ein Magnetventil als ein Steuerventil (61) enthält.

9. Prozesssteuervorrichtung nach Anspruch 8, **dadurch gekennzeichnet, dass** die Steuerventileinrichtung (58) eines ersten Steuerventileinrichtungstyps eine 3/3-Ventil-funktionalität hat und dass die Steuerventileinrichtung (58) eines zweiten Steuerventileinrichtungstyps eine 5/3-Ventil-funktionalität hat.

10. Prozesssteuervorrichtung nach Anspruch 8 oder 9, **dadurch gekennzeichnet, dass** die Montage-Schnittstelle (57) der Schnittstellenplatte (46) zur Befestigung jeder Steuerventileinrichtung (58) über eine Mehrzahl von mit Innengewinden versehenen Befestigungsbohrungen (69) verfügt, wobei zweckmäßigerweise zur Montage unterschiedlicher Typen von Steuerventileinrichtungen (58) stets unterschiedliche oder teils die gleichen und teils unterschiedliche Befestigungsbohrungen (69) zur Fixierung von sich an der Steuerventileinrichtung (58) abstützenden Befestigungsschrauben (65) genutzt sind.

11. Prozesssteuervorrichtung nach einem der Ansprüche 1 bis 10, **dadurch gekennzeichnet, dass** zwischen dem Befestigungsmodul (36) und der Schnittstellenplatte (46) ein maskenartiges, zweckmäßigerweise gummielastisches Dichtungselement (77) angeordnet ist, durch das eine zur Umgebung hin fluiddichte Verbindung zwischen dem Schnittstellenplatten-Fluidkanalsystem (54) und einem den mindestens einen Antriebskanal (67, 68) umfassenden Befestigungsmodul-Fluidkanalsystem (66) erfolgt.

12. Prozesssteuervorrichtung nach einem der Ansprüche 1 bis 11, **dadurch gekennzeichnet, dass** das Befestigungsmodul (36) plattenförmig ausgebildet ist.

13. Prozesssteuervorrichtung nach einem der Ansprüche 1 bis 12, **dadurch gekennzeichnet, dass** sie einen pneumatisch betätigbaren Stellantrieb (3) aufweist, der über ein Antriebsgehäuse (13) verfügt, in dem sich eine durch gesteuerte Druckluftbeaufschlagung bewegbare, an einer Vorderseite (19) des Antriebsgehäuses (8) herausragende Antriebseinheit (14) erstreckt und an das rückseitig mittels der Befestigungsschnittstelle (28) die Steuereinheit (2) angebaut ist, wobei der Stellantrieb (3) zweckmäßigerweise Bestandteil eines Prozessventils (4) der Prozesssteuervorrichtung (1) sein kann und zur Betätigung einer Ventilarmatur (5) des Prozessventils (4) ausgebildet ist.

14. Prozesssteuervorrichtung nach einem der Ansprüche 1 bis 13, **dadurch gekennzeichnet dass** die elektropneumatische Steuereinheit (2) eine Steuerelektronik (63) enthält, die zur elektrischen Ansteuerung an die Steuerventileinrichtung (58) angeschlossen ist und die zweckmäßigerweise mindestens einen zum Empfang von Rückmeldesignalen des Stellantriebes (3) geeigneten Rückmeldesignaleingang (96) aufweist, wobei die Steuereinheit (2) zweckmäßigerweise mit zur Generierung von Rückmeldesignalen des Stellantriebes (3) dienenden Rückmeldemitteln (95) ausgestattet ist, die mit dem Rückmeldesignaleingang (96) signaltechnisch verbunden sind.

15. Prozesssteuervorrichtung nach einem der Ansprüche 1 bis 14, **dadurch gekennzeichnet, dass** die Steuereinheit (2) als eine Stellungsreglereinheit (2a) ausgebildet ist, deren Steuerelektronik (63) über eine Regelungsfunktionalität verfügt, bei der es sich zweckmäßigerweise um eine Positionsregelungsfunktionalität handelt.

## Claims

1. Process control device, with an electro-pneumatic control unit (2) designed to control a pneumatic actuator (3), which has a mounting module (36) which has, on a lower side (34), a mounting interface (28) designed for fixing to a drive housing (13) of the actuator (3) and which has, fixed to the mounting module (36), an electrically operable control valve unit (58) containing at least one control valve (61) which communicates with at least one drive passage (67, 68) passing through the mounting module (36) for fluidic connection with the actuator (3), wherein the control unit (2) has an interface board (46), separate from the mounting module (36), which is mounted on the mounting module (36) at its upper side (35) facing away from the mounting interface (28), and through which passes an interface board fluid passage system (54) communicating with at least one drive passage (67, 68) of the mounting module (36), wherein the interface board (46) has on its upper side (35) facing away from the mounting module (36) a mechanical-pneumatic mounting interface (57), at which the control valve unit (58) is mounted with simultaneous communication with the interface board fluid passage system (54), **characterised in that** the mounting module (36) has on its upper side (35) facing away from the mounting interface (28) a locating recess (45) in which the interface board (46) is inserted, wherein the interface board (46) is held completely in the locating recess (45) in such a way that its upper side (47) runs flush with the surface sections of the upper side (35) of the mounting module (36) framing the locating recess (45).

2. Process control device according to claim 1, **characterised in that** the control valve unit (58) is in the form of an assembly and has a support plate (84), carrying each control valve (61) of the control valve unit (58), and through which passes a support plate fluid passage system (85) communicating with the control valve or valves (61), wherein the control valve unit (58) is so mounted at the mounting interface (57) of the interface board (46) by means of the support plate (84) that the support plate fluid passage system (85) is in fluidic connection with the interface board fluid passage system (54), wherein expediently the support plate (84) has on its lower side (86) facing the interface board (46) a mechanical-pneumatic attachment interface (87) connected to the mounting interface (57) of the interface board (46) and carries on its upper side which faces away in this respect the control valve or valves (61), wherein it has on this upper side (88) expediently a mounting face (92) equipped with at least one control valve (61).

3. Process control device according to claim 2, **characterised in that** the support plate (84) is designed in one-piece or is modular in form and comprised of several plate-like support plate modules (93) stacked one above the other in the vertical direction.

4. Process control device according to any of claims 1 to 3, **characterised in that** the control valve unit (58) has several control valves (61).

5. Process control device according to claim 4 in conjunction with claim 2 or 3, **characterised in that** the several control valves (61) are mounted individually on the support plate (84) or are mounted together on the support plate (84) via a common base body (89).

6. Process control device according to any of claims 1 to 5, **characterised in that** all fluid passages of the interface board fluid passage system (54) pass through the interface board (46) in a straight line in their vertical direction from the lower side (55) to the upper side (47), wherein the orifice pattern of the fluid passages of the interface board fluid passage system (54) is expediently identical on the lower side (55) and the upper side (47) of the interface board (46).

7. Process control device according to any of claims 1 to 6, **characterised in that** the interface board (46) is fixed to the mounting module (36) by means of mounting screws (82) passing through the mounting module (36) from below, wherein each mounting screw (82) is expediently screwed into a blind-hole-like mounting hole (81) of the interface board (46).

8. Process control device according to any of claims 1 to 7, **characterised in that** it has several control valve units (58) of different types, which differ from one another at least in their functionality and/or in their design, wherein the mounting interface (57) of the interface board (46) is designed for the alternative mounting of one control valve unit (58) of each available control valve unit type, wherein expediently the control valve unit (58) of a first control valve unit type contains at least one piezo valve as a control valve (61), and the control valve unit (58) of a second control valve unit type contains at least one solenoid valve as a control valve (61).

9. Process control device according to claim 8, **characterised in that** the control valve unit (58) of a first control valve unit type has a 3/3-valve functionality and that the control valve unit (58) of a second control valve unit type has a 5/3-valve functionality.

10. Process control device according to claim 8 or 9, **characterised in that** the mounting interface (57) of the interface board (46) has for mounting each control valve unit (58) a multiplicity of mounting holes (69) provided with internal thread, wherein expediently for mounting different types of control valve unit (58), always different or partly the same and partly different mounting holes (69) are used for the fixing of mounting screws (65) resting on the control valve unit (58).

11. Process control device according to any of claims 1 to 10, **characterised in that** between the mounting module (36) and the interface board (46) there is provided a mask-like, expediently rubber-elastic seal element (77), through which is effected a connection, fluidtight against the environment, between the interface board fluid passage system (54) and a mounting module fluid passage system (66) which includes the drive passage or passages (67, 68).

12. Process control device according to any of claims 1 to 11, **characterised in that** the mounting module (36) is plate-like.

13. Process control device according to any of claims 1 to 12, **characterised in that** it has a pneumatically operable actuator (3) which has a drive housing (13) in which there extends a drive unit (14), movable by controlled compressed air pressurisation and protruding from a front (19) of the drive housing (8), and to the rear of which the control unit (2) is attached by means of the mounting interface (28), wherein the actuator (3) may expediently be part of a process valve (4) of the process control device (1) and is designed to actuate a valve fitting (5) of the process valve (4).

14. Process control device according to any of claims 1 to 13, **characterised in that** the electro-pneumatic control unit (2) contains control electronics (63) which are connected to the control valve unit (58) for electrical control and which expediently have at least one feedback signal input (96) for the receipt of feedback signals from the actuator (3), wherein the control unit (2) expediently is equipped with feedback means (95) serving to generate feedback signals from the actuator (3) which are connected to the feedback signal input (96) for signalling.

15. Process control device according to any of claims 1 to 14, **characterised in that** the control unit (2) is in the form of a position control unit (2a) which has control electronics (63) with control functionality, expediently involving position control functionality.

## Revendications

1. Dispositif de commande de processus, avec une unité de commande (2) électropneumatique réalisée pour la commande d'un entraînement de réglage (3) pneumatique, qui présente un module de fixation (36) qui dispose au niveau d'un côté inférieur (34) d'une interface de fixation (28) réalisée pour la fixation à un boîtier d'entraînement (13) de l'entraînement de réglage (3), et qui présente un dispositif de soupape de commande (58) actionnable électriquement, contenant au moins une soupape de commande (61), fixé au module de fixation (36), qui communique avec au moins un canal d'entraînement (67, 68) traversant le module de fixation (36) pour la liaison fluidique avec l'entraînement de réglage (3), dans lequel l'unité de commande (2) présente une plaque d'interface (46) séparée par rapport au module de fixation (36) qui est montée au niveau du module de fixation (36) sur son côté supérieur (35) éloigné de l'interface de fixation (28) et qui est traversée par un système de canal fluidique (54) de plaque d'interface communiquant avec l'au moins un canal d'entraînement (67, 68) du module de fixation (36), dans lequel la plaque d'interface (46) présente sur son côté supérieur (35) éloigné du module de fixation (36) une interface de montage (57) mécano-pneumatique, au niveau de laquelle le dispositif de soupape de commande (58) est monté sous communication simultanée avec le système de canal fluidique (54) de plaque d'interface, **caractérisé en ce que** le module de fixation (36) présente sur son côté supérieur (35) éloigné de l'interface de fixation (28) une cavité de réception (45), dans laquelle la plaque d'interface (46) est insérée, dans lequel la plaque d'interface (46) est reçue complètement dans la cavité de réception (45) de telle manière que son côté supérieur (47) s'étende à fleur avec les sections de surface encadrant la cavité de réception (45) du côté supérieur (35) du module de fixation (36).

2. Dispositif de commande de processus selon la revendication 1, **caractérisé en ce que** le dispositif de soupape de commande (58) est réalisé comme une unité structurelle et présente une plaque porteuse (84) portant chaque soupape de commande (61) du dispositif de soupape de commande (58) qui est traversée par un système de canal fluidique (85) de plaque porteuse communiquant avec l'au moins une soupape de commande (61), dans lequel le dispositif de soupape de commande (58) est monté au moyen de la plaque porteuse (84) au niveau de l'interface de montage (57) de la plaque d'interface (46) de telle manière que le système de canal fluidique (85) de plaque porteuse soit en liaison fluidique avec le système de canal fluidique (54) de plaque d'interface, dans lequel de manière appropriée, la plaque porteuse (84) présente sur son côté inférieur (86) tourné vers la plaque d'interface (46) une interface rapportée (87) mécano-pneumatique, couplée à l'interface de montage (57) de la plaque d'interface (46) et sur son côté supérieur éloigné à cet effet porte l'au moins une soupape de commande (61), dans lequel elle présente sur ce côté supérieur (88) de manière appropriée une surface d'équipement (92) équipée de l'au moins une soupape de commande (61).

3. Dispositif de commande de processus selon la revendication 2, **caractérisé en ce que** la plaque porteuse (84) est réalisée d'un seul tenant ou est constituée de manière modulaire et se compose de plusieurs modules de plaque porteuse (93) en forme de plaque empilés dans leur sens vertical les uns sur les autres.

4. Dispositif de commande de processus selon l'une des revendications 1 à 3, **caractérisé en ce que** le dispositif de soupape de commande (58) présente plusieurs soupapes de commande (61).

5. Dispositif de commande de processus selon la revendication 4 en liaison avec la revendication 2 ou 3, **caractérisé en ce que** les plusieurs soupapes de commande (61) sont fixées individuellement à la plaque porteuse (84) ou sont fixées par le biais d'un corps de base (89) commun ensemble à la plaque porteuse (84).

6. Dispositif de commande de processus selon l'une des revendications 1 à 5, **caractérisé en ce que** tous les canaux fluidiques du système de canal fluidique (54) d'interface traversent la plaque d'interface (46) linéairement dans leur direction verticale du côté inférieur (55) au côté supérieur (47), dans lequel le modèle d'embouchure des canaux fluidiques du système de canal fluidique (54) d'interface est identique de manière appropriée sur le côté inférieur (55) et sur le côté supérieur (47) de la plaque d'interface (46).

7. Dispositif de commande de processus selon l'une des revendications 1 à 6, **caractérisé en ce que** la plaque d'interface (46) est fixée au moyen de vis de fixation (82) traversant le module de fixation (36) depuis le bas au module de fixation (36), dans lequel chaque vis de fixation (82) est vissée de manière appropriée dans un perçage de fixation (81) de type trou borgne de la plaque d'interface (46).

8. Dispositif de commande de processus selon l'une des revendications 1 à 7, **caractérisé en ce qu'**il dispose de plusieurs dispositifs de soupape de commande (58) de type différent qui se distinguent au moins dans leur fonctionnalité et/ou dans leur structure les uns des autres, dans lequel l'interface de montage (57) de la plaque d'interface (46) est réalisée pour le montage alternatif d'un dispositif de soupape de commande (58) de chaque type de dispositif de soupape de commande présent, dans lequel de manière appropriée le dispositif de soupape de commande (58) d'un premier type de dispositif de soupape de commande contient au moins une piézosoupape comme soupape de commande (61) et le dispositif de soupape de commande (58) d'un second type de dispositif de soupape de commande contient au moins une soupape magnétique comme soupape de commande (61).

9. Dispositif de commande de processus selon la revendication 8, **caractérisé en ce que** le dispositif de soupape de commande (58) d'un premier type de dispositif de soupape de commande présente une fonctionnalité de soupape 3/3 et que le dispositif de soupape de commande (58) d'un second type de dispositif de soupape de commande présente une fonctionnalité de soupape 5/3.

10. Dispositif de commande de processus selon la revendication 8 ou 9, **caractérisé en ce que** l'interface de montage (57) de la plaque d'interface (46) dispose pour la fixation de chaque dispositif de soupape de commande (58) d'une pluralité de perçages de fixation (69) pourvus de filets intérieurs, dans lequel de manière appropriée pour le montage de différents types de dispositifs de soupape de commande (58) des perçages de fixation toujours différents ou des perçages de fixation partiellement identiques et partiellement différents (69) sont utilisés pour la fixation de vis de fixation (65) s'appuyant contre le dispositif de soupape de commande (58).

11. Dispositif de commande de processus selon l'une des revendications 1 à 10, **caractérisé en ce qu'**un élément de garniture (77) élastique comme un caoutchouc de manière appropriée, de type masque est agencé entre le module de fixation (36) et la plaque d'interface (46), par lequel une liaison étanche au fluide vers l'environnement entre le système de canal fluidique (54) de plaque d'interface et un système de canal fluidique (66) de module de fixation comprenant l'au moins un canal d'entraînement (67, 68) est effectuée.

12. Dispositif de commande de processus selon l'une des revendications 1 à 11, **caractérisé en ce que** le module de fixation (36) est réalisé en forme de plaque.

13. Dispositif de commande de processus selon l'une des revendications 1 à 12, **caractérisé en ce qu'**il présente un entraînement de réglage (3) actionnable par voie pneumatique, qui dispose d'un boîtier d'entraînement (13), dans lequel s'étend une unité d'entraînement (14) dépassant sur un côté avant (19) du boîtier d'entraînement (8), mobile par sollicitation d'air comprimé commandée et sur lequel l'unité de commande (2) est rapportée côté arrière au moyen de l'interface de fixation (28), dans lequel l'entraînement de réglage (3) peut faire partie de manière appropriée d'une soupape de processus (4) du dispositif de commande de processus (1) et est réalisé pour l'actionnement d'une armature de soupape (5) de la soupape de processus (4).

14. Dispositif de commande de processus selon l'une des revendications 1 à 13, **caractérisé en ce que** l'unité de commande électropneumatique (2) contient une électronique de commande (63) qui est raccordée pour la commande électrique au dispositif de soupape de commande (58) et qui présente de manière appropriée au moins une entrée de signal en retour (96) appropriée pour la réception de signaux en retour de l'entraînement de réglage (3), dans lequel l'unité de commande (2) est équipée de manière appropriée de moyens de retour (95) servant à la génération de signaux en retour de l'entraînement de réglage (3) qui sont reliés en signal à l'entrée de signal en retour (96).

15. Dispositif de commande de processus selon l'une des revendications 1 à 14, **caractérisé en ce que** l'unité de commande (2) est réalisée comme une unité de régulateur de position (2a) dont l'électronique de commande (63) dispose d'une fonctionnalité de régulation, pour laquelle il s'agit de manière appropriée d'une fonctionnalité de régulation de position.
